(19) Europäisches Patentamt

European Patent Office

Office européen des brevets

(11) **EP 1 412 237 B1**

(12) **EUROPÄISCHE PATENTSCHRIFT**

(45) Veröffentlichungstag und Bekanntmachung des Hinweises auf die Patenterteilung:
**26.04.2006   Patentblatt 2006/17**

(21) Anmeldenummer: **02754347.9**

(22) Anmeldetag: **11.07.2002**

(51) Int Cl.:
***B60T 8/00*** *(2006.01)*

(86) Internationale Anmeldenummer:
**PCT/DE2002/002536**

(87) Internationale Veröffentlichungsnummer:
**WO 2003/008242 (30.01.2003 Gazette 2003/05)**

(54) **VERFAHREN UND VORRICHTUNG ZUR ERKENNUNG UND BEHEBUNG EINER UMKIPPGEFAHR**

METHOD AND DEVICE FOR IDENTIFYING AND ELIMINATING THE RISK OF ROLLOVER

PROCEDE ET DISPOSITIF POUR IDENTIFIER ET ELIMINER UN RISQUE DE RENVERSEMENT

(84) Benannte Vertragsstaaten:
**DE FR**

(30) Priorität: **18.07.2001   DE 10135020**

(43) Veröffentlichungstag der Anmeldung:
**28.04.2004   Patentblatt 2004/18**

(73) Patentinhaber: **ROBERT BOSCH GMBH**
**70442 Stuttgart (DE)**

(72) Erfinder:
• **TRAECHTLER, Ansgar**
  **71254 Ditzingen-Hirschlanden (DE)**
• **LEIBELING, Frank**
  **71696 Moeglingen (DE)**
• **METZGER, Marco**
  **71701 Schwieberdingen (DE)**

(56) Entgegenhaltungen:
DE-A- 19 751 839          DE-A- 19 751 867
DE-A- 19 830 189          DE-A- 19 958 221
US-B1- 6 178 368

EP 1 412 237 B1

**Beschreibung**

Stand der Technik

Die Erfindung geht aus von einem Verfahren und einer Vorrichtung zur Stabilisierung eines Fahrzeugs, vorzugsweise zur Vermeidung des Umkippens eines Fahrzeuges um eine in Längsrichtung des Fahrzeuges orientierte Fahrzeugsachse. Solche Vorrichtungen und Verfahren sind aus dem Stand der Technik in vielerlei Modifikationen bekannt.

Fahrzeuge mit hohem Schwerpunkt und weicher Federung, beispielsweise SUV's (= "Sport Utility Vehicles") oder Fahrzeuge, welche gleichzeitig offroad- und onroadtauglich sein sollen, verlieren bei speziellen Fahrmanövern wie Spurwechsel, Kreisfahrt oder Kurvenfahrt mit zunehmendem Lenkwinkel an Stabilität gegenüber einer Drehung um eine in Längsrichtung des Fahrzeugs orientierte Fahrzeugachse. Dies ist insbesondere der Fall, wenn die Schwerpunktshöhe stark variieren kann, wie z.B beim Fahren mit und ohne Dachlast oder bei Fahrzeugen mit einem Niveaureguliersystem. Die Standardmaßnahmen eines Fahrdynamikregelungssystems wie ESP können dies nicht in allen Fällen verhindern, da sie in erster Linie die Querdynamik bezüglich einer Drehung um die Hochachse des Fahrzeugs regeln.

Aus der DE 199 07 633 A1 ist ein einleitend erwähntes Verfahren zur Stabilisierung eines Fahrzeuges, vorzugsweise zur Vermeidung des Umkippens eines Fahrzeuges um eine in Längsrichtung des Fahrzeuges orientierte Fahrzeugsachse bekannt. Hierzu wird eine die Querdynamik des Fahrzeuges beschreibende Größe ermittelt. Diese Größe wird mit wenigstens einem charakteristischen Wert, insbesondere einem Schwellenwert, für diese Größe verglichen. Für den Fall, bei dem die die Querdynamik beschreibende Größe größer als der oder gleich dem charakteristischen Wert ist, wird die Geschwindigkeit des Fahrzeuges wenigstens durch Bremseneingriffe an wenigstens einem Rad und/oder durch Motoreingriffe und/oder durch Retardereingriffe auf einen vorgebbaren Geschwindigkeitswert reduziert oder auf einem vorgebbaren Geschwindigkeitswert gehalten.

Aus der DE 197 51 891 A1 ist eine Vorrichtung und Verfahren zur Stabilisierung eines Fahrzeuges bei Kipptendenz bekannt. Hierzu wird für wenigstens ein Rad eine das Radverhalten des entsprechenden Rades quantitativ beschreibende Größe ermittelt. Wenigstens in Abhängigkeit der für das wenigstens eine Rad ermittelten Größe, die das Radverhalten quantitativ beschreibt, wird ermittelt, ob für das Fahrzeug eine Kipptendenz um eine in Längsrichtung des Fahrzeuges orientierte Fahrzeugachse vorliegt. Bei Vorliegen einer Kipptendenz werden wenigstens an wenigstens einem Rad des Fahrzeuges stabilisierende Bremseneingriffe durchgeführt.

Aus der DE 198 44 912 A1 ist eine Vorrichtung und Verfahren zur Beeinflussung des Vortriebes eines Fahrzeuges bekannt. Hierzu weist die Vorrichtung erste Mittel auf, mit denen eine Querbeschleunigungsgröße erfasst wird, die die auf das Fahrzeug wirkende Querbeschleunigung beschreibt. Ferner weist die Vorrichtung zweite Mittel auf, mit denen eine Größe ermittelt wird, die das zeitliche Verhalten der Querbeschleunigungsgröße beschreibt. Ferner weist die Vorrichtung dritte Mittel auf, mit denen wenigstens in Abhängigkeit der Querbeschleunigungsgröße und der Größe, die das zeitliche Verhalten der Querbeschleunigungsgröße beschreibt, eine Eingriffsgröße ermittelt wird. Ferner weist die Vorrichtung vierte Mittel auf, mit denen zur Beeinflussung des Vortriebes zumindest Motoreingriffe durchgeführt werden, wobei die Motoreingriffe in Abhängigkeit der Eingriffsgröße vorgenommen werden.

Vorteile der Erfindung

Die Erfindung geht von einer Vorrichtung oder einem Verfahren zur Vermeidung des Umkippens eines Fahrzeuges um eine in Längsrichtung des Fahrzeuges orientierte Fahrzeugachse aus. Eine erhöhte Umkippgefahr kann beispielsweise bei den folgenden Fahrmanövern vorliegen:

- schneller Spurwechsel, gekennzeichnet durch eine große zeitliche Änderung der Querbeschleunigung,
- näherungsweise Kreisfahrt, gekennzeichnet durch eine Querbeschleunigung mit nahezu konstantem Betrag und eine sehr kleine zeitliche Änderung des Betrags der Querbeschleunigung,
- Kurvenfahrt.

Dazu wird eine die Querdynamik des Fahrzeuges beschreibende Größe ermittelt wird, welche mit wenigstens einem charakteristischen Wert, insbesondere einem Schwellenwert, verglichen wird. Dabei ist das Fahrzeug mit einem Regelungssystem ausgestattet ist, über dessen Ausgangssignale entsprechend den Ausgangssignalwerten Aktoren angesteuert werden. Für den Fall, bei dem die die Querdynamik des Fahrzeuges beschreibende Größe größer oder gleich dem charakteristischen Wert ist, wird die Menge aller möglichen vom Regelungssystem zur Stabilitätsregelung an die Aktoren abgebbaren Kombinationen von Ausgangssignalwerten eingeschränkt. Die Einschränkung dieser Eingriffe erfolgt durch den ROP-Regler, welcher als Teil der Software des Regelungssystems implementiert werden kann. Diese Einschränkung ermöglicht ein gezieltes Verbot derjenigen Regeleingriffe durch das Regelungssystem, welche zu einer weiteren Erhöhung der Kippgefahr führen.

Dabei ist als Regelungssystem in einer besonderen Ausgestaltung der Erfindung das Fahrdynamik-Regelungssystem ESP (= "electronic stability program") denkbar. Dieses Fahrdynamik-Regelungssystem regelt die Querdynamik des Fahrzeuges bezüglich einer Drehung um die Hochachse durch eine Regelung der individuellen Raddrehzahlen. Die Regelung der Raddrehzahlen basiert auf einem Vergleich zwischen einer gemessenen oder berechneten Ist-Gierrate sowie einer gewünschten Soll-Gierrate. Der ROP-Regler ist als Teilfunktion innerhalb ESP darstellbar.

Es ist auch denkbar, daß es sich beim Regelungssystem um ein ABS-System (ABS = "Anti-Blockier-System") handelt. Unter einem ABS-System wird eine Regeleinrichtung im Bremssystem verstanden, die das Blockieren der Räder beim Bremsen verhindert und damit die Lenkbarkeit und die Fahrstabilität erhält.

Es ist auch denkbar, daß es sich beim Regelungssystem um ein ASR-System (ASR = "Antriebsschlupf-Regelung") handelt. Unter einem ASR-System wird eine Regeleinrichtung verstanden, die ein Durchdrehen der Räder beim Anfahren und Beschleunigen verhindert und damit die Fahrstabilität sicherstellt.

Der Vorteil, dass ein Umkippen des Fahrzeuges verhindert werden kann, ist offensichtlich.

Ein Vorteil der Erfindung ist, dass damit eine Priorisierung von Regeleingriffen ermöglicht wird. Am Beispiel eines zugrunde liegenden ESP-Regelungssystems bedeutet dies, daß in einem Fahrzustand ohne erhöhte Umkippgefahr um die Fahrzeuglängsachse die Regelung der Fahrdynamik um die Fahrzeughochachse Priorität hat.

Sobald jedoch die die Querdynamik des Fahrzeuges beschreibende Größe größer oder gleich dem charakteristischen Wert ist, hat wird die Menge aller möglichen vom Regelungssystem zur Stabilitätsregelung an die Aktoren abgebbaren Kombinationen von Ausgangssignalwerten eingeschränkt.

Damit hat die Fahrdynamik-Regelung bzgl. der Drehung um die Hochachse nur noch eingeschränkte Priorität, da nun dem Fahrdynamik-Regelungssystem insbesondere diejenigen Fahrdynamik-Regelungseingriffe, welche eine detektierte Umkippgefahr weiter erhöhen oder nicht mindern, untersagt werden.

Die Einschränkung der Menge aller möglichen Kombinationen von Ausgangssignalwerten der an die Aktoren prinzipiell abgebbaren Ausgangssignale des Regelungssystems führt damit vorteilhafterweise zur Untersagung wenigstens eines durch das Regelungssystem prinzipiell möglichen Eingriffs zur Stabilitätsregelung in des Fahrverhalten des Fahrzeuges.

Dabi kann sogar ein zur Erlangung des Regelziels des Regelungssystems geeigneter Eingriff zu untersagt werden. Unter dem Begriff des "Regelungsziels des Regelungssystems" versteht man dabei dasjenige Regelungsziel, welches vom Regelungssystem angestrebt wird, wenn keine Gefahr des Umkippens um eine in Längsrichtung orientierte Achse des Fahrzeugs vorliegt. Das bedeutet am Beispiel eines zugrunde liegenden ESP-Fahrdynamik-Regelungssystems, dass auf eine optimale Regelung der Querdynamik bezüglich einer Drehung um die Hochachse des Fahrzeugs verzichtet wird, sobald eine drohende Umkippgefahr detektiert wird. Die Behebung der Umkippgefahr hat Priorität.

Zugleich können durch diese Untersagung wenigstens eines möglichen Eingriffes in das Fahrverhalten des Fahrzeuges auch mit Nachteilen behaftete Betriebsfälle prinzipiell ausgeschlossen. Ein solcher nachteiliger Betriebsfall liegt beispielsweise vor, wenn im ASR-Betrieb die Bremse gegen den Motor arbeitet, was zu einem erhöhten Verschleiß von Bremsbelägen führt.

Weiterhin hat es sich als vorteilhaft erwiesen, daß für den Fall , bei dem die die Querdynamik des Fahrzeuges beschreibende Größe größer oder gleich dem charakteristischen Wert ist, zugleich vom Regelungssystem zumindest ein Eingriff zur Stabilitätsregelung in das Fahrverhalten vorgenommen wird, dessen Intensität mit wachsendem Betrag, der die Querdynamik des Fahrzeugs beschreibenden Größe derart wächst, daß zumindest drei Intensitätsstufen dieses zumindest einen Eingriffs unterschieden werden können.

Eine vorteilhafte Ausprägung der vorliegenden Erfindung liegt vor, wenn es sich bei dem Regelungssystem um ein Fahrdynamik-Regelungssystem (ESP) handelt. Dadurch können die im Fahrdynamik-Regelungssystem vorhandenen Sensoren, insbesondere der Querbeschleunigungssensor, zur Detektion der Umkippgefahr mitbenutzt werden. Die Erfindung ist damit vorteilhafterweise sowohl hinsichtlich der benötigten Informationen sowie der ausgeführten Maßnahmen als Teilfunktion des Fahrdynamik-Regelungssystems darstellbar.

Für die Ermittlung der die Querdynamik beschreibenden Größe können vorteilhafterweise die Querbeschleunigung sowie die zeitliche Änderung der Querbeschleunigung verwendet werden. Die Verwendung der zeitlichen Änderung der Querbeschleunigung erlaubt die Erfassung von sehr hochdynamischen Vorgängen, wie beispielsweise schnellen Spurwechseln.

Es gibt Fälle, in denen die die Querdynamik beschreibende Größe kurzzeitig über dem charakteristischen Wert liegt, aber sofort wieder auf einen unkritischen Wert abklingt. Zur Ausfilterung solcher Ereignisse eignet sich ein Tiefpass.

Deshalb ist es von Vorteil, wenn in die Ermittlung der die Querdynamik beschreibenden Größe eine Tiefpassfilterung eingeht.

Gemäß der Erfindung erfolgt mit einem Anwachsen der die Querdynamik beschreibenden Größe (KoKipp) eine Reduktion des maximal möglichen Motormoments.

Für die Ermittlung der die Querdynamik beschreibenden Größe können vorteilhafterweise als alternative Möglichkeit auch die Einfederwege der Räder herangezogen werden. Unter dem Begriff "Einfederwege" werden dabei die relativen Abstände zwischen den Radeinheiten und dem Fahrzeugaufbau verstanden. Aus den Einfederwegen kann eine der Querbeschleunigung entsprechende Größe berechnet werden. Damit stehen zwei Querbeschleunigungswerte zur Verfügung: Der vom Querbeschleunigungssensor gemessene Wert und der aus den Einfederwegen berechnete Wert. Dies erlaubt eine alternative Betrachtung beider Werte oder eine Kombination beider Werte. Insbesondere wird der Einsatzbereich der vorliegenden Erfindung dadurch vorteilhafterweise beträchtlich erweitert, daß sie sowohl in einem Fahrzeug, welches mit einem Querbeschleunigungssensor ausgestattet ist, einsetzbar ist als auch in einem Fahrzeug, welches mit Messvorrichtungen zur Messung der Einfederwege ausgestattet ist.

Ist das Fahrzeug mit einem Niveauregelsystem ausgestattet, dann können die bei diesem System gemessenen Einfederwege verwendet werden und über das CAN (CAN = "Controller Area Network") dem Regelungssystem zur Verfügung gestellt werden.

Für die folgenden Betrachtungen ist der Fall eines "untersteuernden" Fahrzeugs wichtig. Deshalb soll der Begriff des Untersteuerns im folgenden erklärt werden. Untersteuerndes Fahrverhalten liegt dann vor, wenn mit zunehmender Querbeschleunigung der Schräglaufwinkel an der Vorderachse stärker anwächst als der Schräglaufwinkel an der Hinterachse. Das bedeutet anschaulich, dass das Fahrzeug einer Bahnkurve mit einem kleineren Krümmungsradius folgt als vom Fahrer gewünscht. Als eine wesentliche Maßnahme gegen das Untersteuern wird vom Fahrdynamik-Regelungssystem das kurveninnere Hinterrad abgebremst.

Für den Fall, dass die die Querdynamik beschreibende Größe größer oder gleich dem charakteristischen Wert ist, kann vorteilhafterweise wenigstens einer der folgenden Eingriffe in das Fahrverhalten des Fahrzeuges dem Fahrdynamik-Regelungssystem untersagt werden:

1. Umkippgefahr liegt häufig vor, wenn das Fahrzeug sich in einem untersteuerten Zustand befindet. Dann werden dem Fahrdynamik-Regelungssystem situationsabhängig alle Eingriffe gegen das Untersteuern untersagt (ROP-Regler = Rollover-Prevention-Regler), beispielsweise das Abbremsen des kurveninneren Hinterrads. Unter dem Begriff "situationsabhängig" kann beispielsweise verstanden werden, daß das Verbot der Eingriffe gegen das Untersteuern erst dann wirksam wird, wenn die Querbeschleunigung des Fahrzeuges einen Schwellenwert überschreitet. Durch das Verbot der Eingriffe gegen das Untersteuern gibt es keine weitere Zunahme des Schwimmwinkels mehr und die Umkippgefahr ist deutlich reduziert.

2. Umkippgefahr kann bestehen, wenn bei großer Geschwindigkeit und großer Querbeschleunigung gebremst wird. In diesem Fahrzustand wird dem Fahrdynamik-Regelungssystem eine Reduzierung der Bremskraft am kurvenäußeren Vorderrad untersagt. Dies führt zu einer Abnahme der Querbeschleunigung und einer Reduktion der Umkippgefahr. Diese Funktionalität des wird als "Entbremslogik" bezeichnet.

3. Erhöhte Umkippgefahr besteht auch bei ASR-Bremseingriffen am kurveninneren Vorderrad bei hoher Querbeschleunigung. Dort muß eine Erhöhung der Seitenkraft vermieden werden. Deshalb werden dem Fahrdynamik-Regelungssystem Bremseneingriffe zur Reduzierung des Antriebsschlupfes am kurveninneren Vorderrad untersagt. Dies kann auch ganz anschaulich verstanden werden: Der Fahrer betätigt das Gaspedal und das kurveninnerer Vorderrad dreht durch. In diesem Fall erlaubt der ROP-Regler bei detektierter Umkippneigung dem kurveninneren Vorderrad weiterhin das Durchdrehen.

Weitere vorteilhafter Ausführungsformen der Erfindung können den Unteransprüchen entnommen werden.

Zeichnung

Ein Ausführungsbeispiel der Erfindung ist in der folgenden Zeichnung dargestellt und in der nachfolgenden Beschreibung näher erläutert. Die Zeichnung besteht aus den Figuren 1 bis 7.

Fig. 1 zeigt schematisch ein Regelungssystem, dessen Eingangssignale von Sensoren geliefert werden und über dessen Ausgangssignale Aktoren angesteuert werden.

Fig. 2 zeigt in Form eines Blockschaltbildes eine besondere Ausprägung der Erfindung.

Fig. 3 zeigt in Form eines Blockschaltbildes den Verfahrensablauf bei der Situationserkennung

Fig. 4 zeigt eine Kennlinie, anhand derer der ungefilterte Umkippindikator KoKippRoh berechnet werden kann.

Fig. 5 zeigt in einem Flussdiagramm eine besondere Ausprägung der Ermittlung des gefilterten Umkippindikators KoKipp aus dem ungefilterten Umkippindikator KoKippRoh für den Fall von abnehmenden Werten von KoKippRoh.

Fig. 6 zeigt eine Kennlinie, welche die Ermittlung eines Korrekturfaktors bei gegebenem Fahrzeugniveau, charakterisiert durch HoeGes, erlaubt.

Fig. 7 zeigt das maximal zulässige Motormoment als Funktion der Querbeschleunigung.

Ausführungsbeispiele

Bei der vorliegenden Erfindung handelt es sich um eine Vorrichtung und ein Verfahren zur Erkennung und Unterdrückung einer Umkippgefahr.

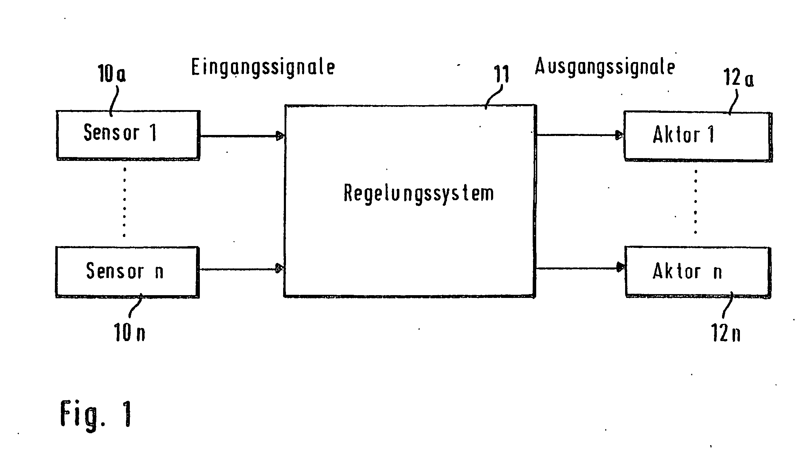

Zunächst soll auf die sehr allgemeine Figur 1 eingegangen werden. Die Blöcke 10a,..., 10n stellen dabei Sensoren dar, deren Ausgangssignale als Eingangssignale eines Regelungssystems 11 verwendet werden. Dieses Regelungssystem 11 erzeugt wiederum Ausgangssignale, welche zur Ansteuerung verschiedenster Aktoren 12a,..., 12n verwendet werden können. Anstelle der Aktoren oder zusätzlich zu den Aktoren können natürlich auch andere Systeme, beispielsweise Fahrerinformationssysteme, von den Ausgangssignalen des Regelungssystems 11 angesteuert werden.

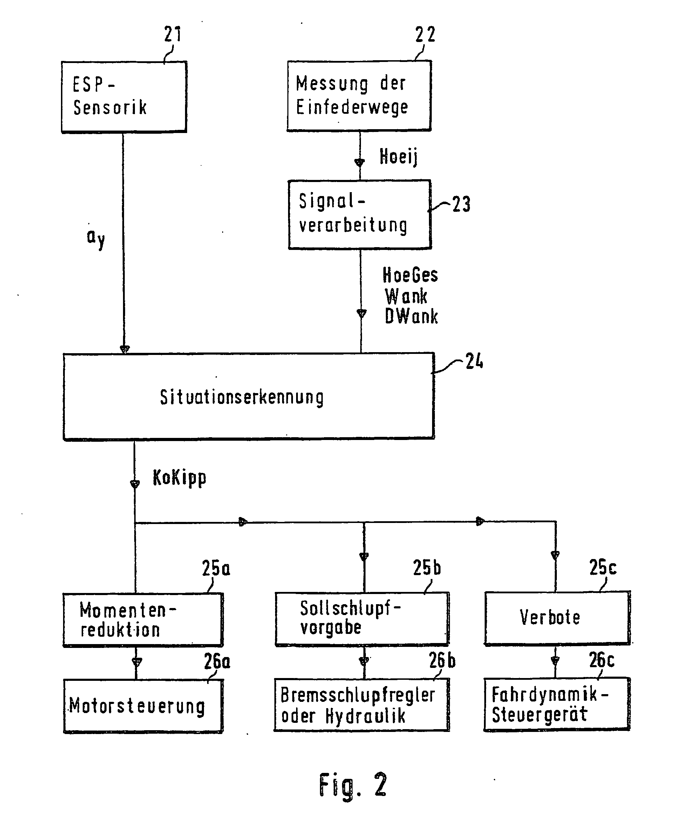

Ein gegenüber Fig. 1 deutlich detaillierteres Bild einer Ausprägung der Erfindung ist in Fig. 2 wiedergegeben. Dieses Bild soll einen groben Überblick über die vorliegende Erfindung liefern.

Die Eingangssignale werden dabei von Signalquellen 21 und/oder 22 geliefert. Bei der Signalquelle 21 handelt es sich um einen Querbeschleunigungssensor, bei der Signalquelle 22 um vier Messvorrichtungen, welche die Einfederwege der Räder erfassen. Bei der Signalquelle 22 sind auch Ausführungsformen denkbar, welche nur zwei Messvorrichtungen zur Erfassung der Einfederwege beinhalten. In diesem Fall werden lediglich die Einfederwege an den Vorderrädern oder an den Hinterrädern erfasst.

Die Signalquelle 21 liefert die gemessene Querbeschleunigung $a_y$. Die Signalquelle 22 liefert vier Ausgangssignale, welche in Fig. 2 mit Hoeij gekennzeichnet sind. Dabei kennzeichnet ij das entsprechende Rad. Darauf wird später näher eingegangen.

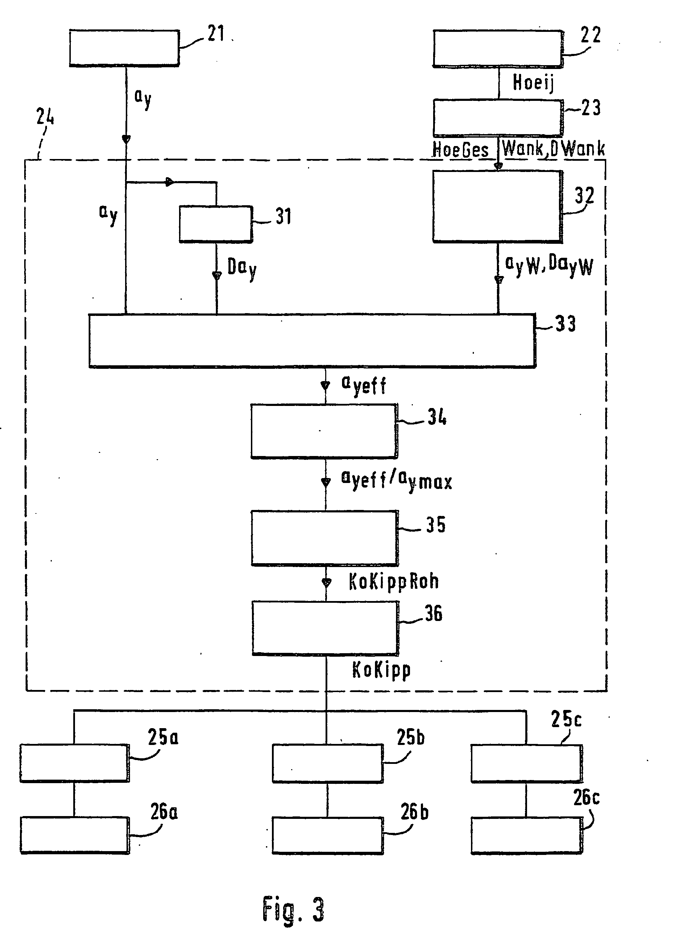

Die Signale Hoeij werden einem Block 23 zugeführt, in welchem diese Signale verarbeitet werden. Im Block 23 werden aus diesen Größen die weiteren Größen HoeGes, Wank und DWank berechnet und als Ausgangssignale zur Verfügung gestellt. HoeGes ist ein Maß für die Schwerpunktshöhe des Fahrzeugs, Wank ist ein Maß für die Wankwinkelgeschwindigkeit, DWank ist ein Maß für die zeitliche Änderung der Wankwinkelgeschwindigkeit. Aus Gründen der einfacheren Verständlichkeit wird die Bedeutung der Signale Hoeij, HoeGes, Wank und DWank erst später im Zusammenhang mit Fig. 3 zu erläutert.

Die Situationserkennung findet im Block 24 statt. In diesem Block wird aus den Eingangssignalen ein Umkippindikator KoKipp ermittelt. Dieser Umkippindikator stellt ein Maß für die Umkippgefahr eines Fahrzeuges um seine Längsachse dar. In einer bevorzugten Ausführungsform hat KoKipp den Minimalwert 0 und den Maximalwert 1. Dabei bedeutet der Wert 0, dass keine Umkippgefahr vorliegt und der Wert 1, dass hohe Umkippgefahr vorliegt.

Die Ausgangssignale von Block 24 werden den Blöcken 25a, 25b und 25c zugeführt. In diesen Blöcken werden die Gegenmaßnahmen im Falle einer detektierten Umkippgefahr getroffen. Dabei stehen die folgenden drei wesentlichen Maßnahmen zur Vefügung.

In Block 25a wird eine Momentenreduktion als Gegenmaßnahmegegen die Umkippgefahr bestimmt. Diese Momentenreduktion wird an die Motorsteuerung 26a weitergeleitet.

In Block 25b werden Sollschlupfwerte berechnet. Diese Sollschlupfwerte werden an die Bremsschlupfregler 26b oder andere Steuergeräte hydraulischer Systeme weitergeleitet.

In Block 25c werden Verbote aktiviert. Durch diese Verbote wird die Menge aller von einer Fahrdynamik-Regelung prinzipiell durchführbaren Maßnahmen eingeschränkt. Auf diesen Punkt wird später detailliert eingegangen. Die Ausgangssignale des Blocks 25c werden deshalb einem Fahrdynamik-Steuergerät 26c zugeführt.

Es ist nicht zwingend notwendig, daß alle drei wesentlichen Maßnahmen zugleich ausgeführt werden müssen.

Fig. 3 zeigt in Form eines Blockschaltbildes den Verfahrensablauf zur Detektion einer Umkippgefahr. Als Eingangssignale stehen die bereits bei Fig. 2 erwähnten Signale $a_y$, HoeGes, Wank und Dwank bereit.

Dabei umfasst der strichliert eingezeichnete Block 24 diejenigen Teile, welche der Situationserkennung zugeordnet werden können. Der Block 24 wurde bereits in Fig. 2 eingeführt.

Die Blöcke 21, 22, 23, 25a, 25b, 25c, 26a, 26b und 26c wurden bereits mit Fig. 2 beschrieben. Deshalb ist Fig. 3 in Zusammenhang mit Fig. 2 zu betrachten.

In Block 31 wird die Änderung pro Zeiteinheit der gemessenen Querbeschleunigung $a_y$ ermittelt. Diese Änderung pro Zeiteinheit wird mit $Da_y$ gekennzeichnet. Im folgenden wird die Änderung pro Zeiteinheit als Differentialquotient bezeichnet.

In Block 32 werden aus den Eingangssignalen HoeGes, Wank und DWank die Signale $a_{yW}$ und $Da_{yW}$ erzeugt. Das Subskript "W" kennzeichnet dabei, dass es sich nicht um gemessene, sondern um aus dem gefilterten Wankwinkel abgeleitete Größen handelt, welche die physikalische Bedeutung der Querbeschleunigung $a_y$ und des Diffentialquotienten $Da_y$ der Querbeschleunigung haben.

Damit stehen dem Block 33 die Eingangssignale $a_y$, $Da_y$, $a_{yW}$ sowie $Da_{yW}$ zur Verfügung. Dabei beschreiben sowohl $a_y$ als auch $a_{yW}$ die Querbeschleunigung. $Da_y$ und $Da_{yW}$ beschreiben die entsprechenden Differentialquotienten, also die Änderungen pro Zeiteinheit. Deshalb können für die Weiterverarbeitung in Block 33 entweder die Signale $a_y$ und $Da_y$ oder $a_{yW}$ und $Da_{yW}$ oder beide zusammen verwendet werden. Im folgenden sei ohne Beschränkung der Allgemeinheit angenommen, daß lediglich die Signale $a_y$ und $Da_y$ weiterverarbeitet werden. Alle Aussagen, die bzgl. der Signale $a_y$ und $Da_y$ gemacht werden, gelten selbstverständlich auch für die Signale $a_{yW}$ und $Da_{yW}$ oder für weitere Signale, welche in irgendeiner Weise aus den vier genannten Signalen hervorgehen und die Bedeutung einer Querbeschleunigung und derer Differentialquotienten haben.

Als Ausgangssignal liefert Block 33 Maßzahl $a_{yeff}$. Es wurden bereits einige Fahrmanöver erwähnt, welche zu einer erhöhten Umkippgefahr führen können. Bei diesen Manövern liegt entweder eine große Querbeschleunigung und/oder eine große zeitliche Ableitung des Betrags der Querbeschleunigung vor. Diese Situationen lassen sich gemeinsam in einer Maßzahl $a_{yeff}$ durch gewichtete Addition berücksichtigen. Die Maßzahl $a_{yeff}$ wird deshalb folgendermaßen ermittelt:

$a_{yeff} = |a_y| + c * |Da_y|$ bei zunehmender Querbeschleunigung, d.h. $a_y * Da_y > 0$ und

$a_{yeff} = |a_y|$ bei nicht zunehmender Querbeschleunigung, d.h. $a_y * Da_y < 0$ oder $a_y * Da_y = 0$

Dabei kennzeichnet $Da_y$ den Differentialquotienten der Querbeschleunigung. Im Falle einer zunehmenden Querbeschleunigung ist die Berücksichtigung von $Da_y$ deshalb notwendig, damit eine Umkippgefahr rechtzeitig detektiert werden kann.

Im Falle einer abnehmenden Querbeschleunigung ist die Berücksichtigung von $Da_y$ nicht notwendig.

c kann eine Konstante sein, welche in der Applikationsphase experimentell ermittelt wird. Durch Fahren von Spurwechseln ist c dann so zu wählen, dass auch bei instationären Manövern der Umkippindikator KoKipp rechtzeitig anspricht. Es ist aber auch möglich, c aus einer Kennlinie zu ermitteln. Bei dieser Kennlinie ist auf der Ordinate c aufgetragen, auf der Abszisse wird die Differenz zwischen der ungefilterten Querbeschleunigung und der gefilterten Querbeschleunigung aufgetragen..Diese Differenz ist eine Maßzahl für die Dynamik des Fahrmanövers. Bei hochdynamischen Fahrmanövern wie beispielsweise einem schnellen Spurwechsel des Fahrzeuges ist die Differenz zwischen der ungefilterten Querbeschleunigung und der gefilterten Querbeschleunigung groß und damit wird auch ein großes c gewählt. Bei niederdynamischen Fahrmanövern wie beispielsweise einer Kreisfahrt mit konstanter Geschwindigkeit des Fahrzeuges ist die Differenz zwischen der ungefilterten Querbeschleunigung und der gefilterten Querbeschleunigung klein und damit wird auch ein kleines c gewählt

In Block 34 wird aus dem Eingangssignal $a_{yeff}$ das Ausgangssignal $a_{yeff}/a_{ymax}$ ermittelt. Dazu wird in der Applikationsphase bei stationärer Kreisfahrt experimentell ermittelt, bei welcher Querbeschleunigung $a_{ymax}$ das Fahrzeug umzukippen droht. Dieser Wert ist abhängig von der Schwerpunktshöhe des Fahrzeuges. Falls weitergehende Informationen über die Schwerpunktshöhe verfügbar sind, beispielsweise durch Auswertung der Einfederwege, ist $a_{ymax}$ entsprechend situationsabhängig zu korrigieren. Andernfalls ist die Schwelle so niedrig zu halten, dass sämtliche maßgebenden Situationen wie beispielsweise die Beladung oder das eingestellte Fahrniveau sicher beherrschbar bleiben. Weiterhin kann auch eine Korrektur durch andere vorhandene Signale, beispielsweise durch die Fahrgeschwindigkeit, sinnvoll sein. Der konstante oder situationsabhängige Wert $a_{ymax}$ stellt eine Schwelle für $a_{yeff}$ dar, die nicht überschritten werden darf.

Aus dem Verhältnis von $a_{yeff}$ zu $a_{ymax}$ wird in Block 35 ein ungefilterter Umkippindikator KoKippRoh berechnet, der angibt, wie stark die Kippgefahr ist.

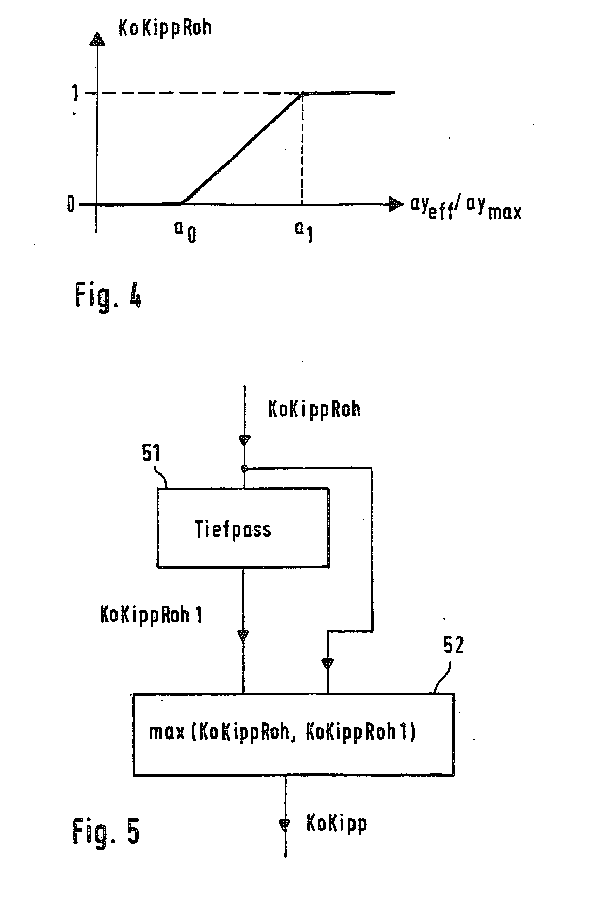

Eine bevorzugte Kennlinie, anhand derer der ungefilterte Umkippindikator KoKippRoh berechnet werden kann, ist in Fig. 4 dargestellt. Dort ist KoKippRoh als Funktion des Verhältnisses $a_{yeff}/a_{ymax}$ aufgetragen. Es handelt sich um eine stetige, stückweise lineare Funktion, welche für $a_{yeff}/a_{ymax} < a_0$ den Wert 0 annimmt, welche für $a_{yeff}/a_{ymax} > a_1$ den Wert 1 annimmt und dazwischen linear von 0 auf 1 wächst. KoKippRoh = 0 bedeutet dabei keine Kippgefahr, KoKippRoh = 1 bedeutet hohe Kippgefahr. Über die Konstanten $a_0$ und $a_1$ lassen sich Ansprechschwelle und Empfindlichkeit des Umkippindikators einstellen. Selbstverständlich sind auch andere Kennlinienverläufe als der in Fig. 4 dargestellte Kennlinienverlauf denkbar.

Dieser ungefilterte Umkippindikator KoKippRoh geht als Eingangssignal in einen Block 36 ein. Dort wird er bei abnehmenden Werten von KoKippRoh mit einem Tiefpass erster Ordnung gefiltert. Im Falle einer steigenden Querbeschleunigung kann dazu eine schnelle Filterung verwendet werden. Im Falle einer fallenden Querbeschleunigung kann dazu eine Filterung mit einem variablen Filterkoeffizienten verwendet werden. Dies entspricht der Verwendung einer Kennlinie. Diese Tiefpassfilterung erlaubt, kurzzeitige Spitzen von KoKippRoh auszublenden. Durch diese Maßnahmen wird in Block 36 aus dem ungefilterten Umkippindikator KoKippRoh der Umkippindikator KoKipp gewonnen.

Fig. 5 zeigt ein spezielles Ausführungsbeispiel von Block 36 in Fig. 3. In einem Flussdiagramm wird die Ermittlung des gefilterten Umkippindikators KoKipp aus dem ungefilterten Umkippindikator KoKippRoh für den Fall von abnehmenden Werten von KoKippRoh dargestellt. Die ermittelten Werte KokippRoh werden für den Fall, dass sie abnehmen, als Eingangssignale in einen Block 51 eingespeist, der in einer bevorzugten Ausführungsform ein Tiefpass 1. Ordnung ist. Block 51 erzeugt als Ausgangssignal das gefilterte Signal KoKippRoh1, welches neben dem Signal KoKippRoh einem Block 52 zugeführt wird. Dort wird das Maximum der Werte der beiden Signale KoKippRoh und KoKippRoh1 bestimmt. KoKipp erhält den Maximalwert der beiden Signale zugewiesen.

Analog zum ungefilterten Umkippindikator KoKippRoh nimmt auch der Umkippindikator KoKipp in einer bevorzugten Ausführungsform Werte zwischen 0 und 1 an. KoKipp = 0 bedeutet dabei keine Kippgefahr, KoKipp = 1 bedeutet hohe Kippgefahr.

Abhängig vom ermittelten Wert von KoKipp werden parallel zwei völlig unterschiedliche Arten von ROP-Reglereingriffen durchgeführt: Kontinuierliche Reglereingriffe sowie diskrete Verbote.

Es finden zwei Arten von kontinuierlichen Reglereingriffen statt (Blöcke 25a, 25b, 26a, 26b):

1. Im Antriebsfall wird für KoKipp > 0 in zunehmendem Maß das Antriebsmoment reduziert. Dies geschieht in der bei der Fahrdynamikregelung (=ESP) üblichen Weise über die Funktion ASR (=Antriebsschlupfregelung), indem der Antriebssollschlupf (=Sollwert für ASR) proportional zum Wert von KoKipp reduziert wird.

2. Für den Freilauf- und den Bremsfall (und auch falls die eben erwähnte erste kontinuierliche Maßnahme im Antriebsfall nicht ausreicht) wird, wenn KoKipp eine Schwelle überschreitet, das kurvenäußere Vorderrad in Bremsschlupf gebracht, so dass das Fahrzeug seitlich wegrutschen kann. Dies geschieht über eine hohe Bremsschlupfvorgabe am kurvenäußeren Vorderrad, die mit einem aktiven Druckaufbau verbunden ist. Auch diese Eingriffsart ist Bestandteil von ESP.

Diese kontinuierlichen Reglereingriffe setzen bei einem ersten Schwellenwert von KoKipp ein und werden mit wachsendem Wert KoKipp mit einer steigenden Intensität durchgeführt. Ab einem zweiten (und größeren) Schwellenwert von KoKipp werden sie mit maximaler Intensität durchgeführt.

Neben diesen kontinuierlichen Eingriffen gibt es 3 diskrete Verbote für den Regler. Für diese sind die Blöcken 25c und 26c zuständig:

1. Dem ROP-Regler (ROP-Regler = Rollover-Prevention-Regler) werden situationsabhängig alle Eingriffe gegen das Untersteuern untersagt. Unter dem Begriff "situationsabhängig" kann beispielsweise verstanden werden, daß das Verbot der Eingriffe gegen das Untersteuern erst dann wirksam wird, wenn die Querbeschleunigung des Fahrzeuges einen Schwellenwert überschreitet. Durch das Verbot der Eingriffe gegen das Untersteuern gibt es keine weitere Zunahme des Schwimmwinkels mehr und die Umkippgefahr ist deutlich reduziert.

2. Dem Regler wird eine Reduzierung der Bremskraft am kurvenäusseren Vorderrad untersagt. Dies ist natürlich nur möglich, falls dieses Rad überhaupt gebremst wird. Dies führt zu einer Abnahme der Querbeschleunigung und einer Reduktion der Umkippgefahr. Diese Funktionalität des ROP-Reglers wird als "Entbremslogik" bezeichnet.

3. Es werden dem Fahrdynamik-Regelungssystem Bremseneingriffe zur Reduzierung des Antriebsschlupfes am kurveninneren Vorderrad untersagt. Dies kann auch ganz anschaulich verstanden werden: Der Fahrer betätigt das Gaspedal und das kurveninnerer Vorderrad dreht durch. In diesem Fall erlaubt der ROP-Regler bei detektierter Umkippneigung dem kurveninneren Vorderrad weiterhin das Durchdrehen.

Die diskreten Verbote 2. und 3. werden für den Regler sofort wirksam, sobald die ROP-Logik aktiviert ist, d.h. sobald KoKipp einen Wert KoKippGrenz überschreitet. In einer vorteilhaften Ausführungsform wird für KoKippGrenz der Wert 0 gewählt.

Das diskrete Verbot 1 wird in einer bevorzugten Ausführungsform erst dann wirksam, wenn neben der Aktivierung der ROP-Logik noch eine zweite Bedingung oder sogar noch weitere Bedingungen erfüllt sind. Wie bereits erwähnt kann eine solche weitere Bedingung darin bestehen, daß die Querbeschleunigung einen Schwellenwert überschreitet. Das bedeutet anschaulich, daß das erste diskrete Verbot erst zu einem späteren Zeitpunkt als die 2. und 3. diskreten Verbote in Kraft treten kann. Bei als gering detektierter Umkippgefahr können das 2. und das 3. Verbot zur Behebung der Umkippgefahr ausreichen.

Neben der Situationserkennung durch Auswertung der vom Querbeschleunigungssensor 10 gelieferten Ausgangssignale besteht alternativ oder zusätzlich die Möglichkeit der Situationserkennung durch Betrachtung der Einfederwege der Räder. Im folgenden werden die Einfederwege Hoeij der Räder als HoeVL, HoeVR, HoeHL und HoeHR näher spezifiziert. Dabei sind

HoeVL = Einfederweg am linken Vorderrad,

HoeVR = Einfederweg am rechten Vorderrad,

HoeHL = Einfederweg am linken Hinterrad und

HoeHR = Einfederweg am rechten Hinterrad.

Diese Größen werden oft im Zusammenhang mit einem Niveauregelungssystem gemessen und stehen dann zur weiteren Auswertung zur Verfügung. Die Messung erfolgt in Fig. 3 in Block 22.

Block 23 verwendet die Einfederwege als Eingangssignale und berechnet daraus die Größen Wank, Dwank und HoeGes.

Aus der seitenweisen Differenz der Einfederwege lassen sich der gefilterte Wankwinkel Wank und die Wankwinkelgeschwindigkeit Dwank schätzen, aus der Summe das Fahrzeugniveau HoeGes. Der gefilterte Wankwinkel ist dabei in einer recht guten Näherung proportional zur Querbeschleunigung. Mit einem festen Parameter $P_{ay}$, der von der Wanksteifigkeit des Fahrzeuges abhängt, werden der gefilterte Wankwinkel in eine äquivalente Querbeschleunigung $a_{yW}$ und entsprechend die Wankwinkelgeschwindigkeit in die zeitliche Ableitung der Querbeschleunigung, gekennzeichnet durch $Da_{yW}$, umgerechnet. Dies geschieht durch die Beziehungen

$$a_{yW} = P_{ay} * Wank$$

und

$$Da_{yW} = P_{ay} * DWank .$$

Das Subskript "W" kennzeichnet dabei, dass es sich nicht um gemessene, sondern um aus dem gefilterten Wankwinkel abgeleitete Größen handelt, $a_{yW}$ und $Da_{yW}$ ersetzen damit die Größen $a_y$ und $Da_y$.

Der ungefilterte Wankwinkel WankRoh errechnet sich dabei durch die folgende Beziehung:

$$WankRoh \cong tan(WankRoh) = (HoeVR+HoeHR-HoeVL-HoeHL)/(2*Radstand)$$

Durch Filterung mit einem Zustandsfilter 2. Ordnung wird der ungefilterte Wert WankRoh geglättet und man erhält damit den gefilterten Wankwinkel Wank. Gleichzeitig wird die Wankwinkelgeschwindigkeit Dwank durch Differentiation gebildet. Dieser Vorgang lässt sich formal darstellen durch

$$[Wank, DWank] = Filter(WankRoh).$$

Neben dem Wankwinkel lässt sich aus den Einfederwegen auch eine geschätzte gefilterte Schwerpunktshöhe HoeGes berechnen.

Diese gefilterte Schwerpunktshöhe HoeGes bezieht sich auf denselben Nullpunkt wie die Einfederwege und stellt damit eine Abweichung der absoluten Schwerpunktshöhe von einer (konstruktionsabhängigen) Bezugshöhe dar. Einen ungefilterten Rohwert Hoe-GesRoh der Schwerpunktshöhe erhält man aus den gemittelten Einfederwegen:

$$HoeGesRoh = (HoeVR + HoeHR + HoeVL + HoeHL)/4 .$$

Anschließend wird der Rohwert mit einem Filter 1. Ordnung geglättet und man erhält die gefilterte Schwerpunktshöhe HoeGes:

$$HoeGes = PT1(HoeGesRoh).$$

Die Kenntnis von HoeGes, erlaubt die Bildung eines Korrekturfaktors, mit dem die Querbeschleunigungsschwelle $a_{ymax}$ multiplikativ korrigiert wird. Ein bevorzugter Verlauf dieses Korrekturfaktors als Funktion von HoeGes ist in Fig. 5 dargestellt. Selbstverständlich kann diese Kennlinie aber auch wesentlich anders aussehen. Für kleine Werte von HoeGes (HoeGes < $h_0$) hat der Korrekturfaktor den Wert 1. Das bedeutet, daß die Querbeschleunigungsschwelle $a_{ymax}$ nicht korrigiert wird. Für große Werte von HoeGes, dies entspricht einem hochliegenden Schwerpunkt des Fahrzeuges, wird der Korrekturfaktor geringer. Damit findet bereits ein früherer Eingriff der ROP-Logik in die Fahrdynamik statt. Die Parameter b, $h_0$ und $h_1$ erlauben eine weitgehende Anpassung der Kennlinie, beispielsweise an den Fahrzeugtyp.

Die Einfederwege können auch zur Genauigkeitsüberwachung bzw. zur Empfindlichkeitsüberwachung des Gierratensensors herangezogen werden. Dann wird die aus den Einfederwegen berechnete Größe $a_{yW}$ nicht anstelle der gemessenen Querbeschleunigung $a_{yW}$ verwendet, sondern um die Empfindlichkeit des Querbeschleunigungssignals zu überwachen. In stationären Fahrsituationen, z.B. gekennzeichnet durch kleine Änderungen der Querbeschleunigung, werden bei Signale verglichen und bei Abweichungen wird daraus ein Korrekturfaktor für die Querbeschleunigung errechnet.

In einer weiteren Ausführungsform ist folgende Überwachung denkbar:

- stimmen die Signale $a_{yW}$ und $a_{yW}$ gut überein, dann wird der Gierratensensor als hinreichend genau angenommen.
- stimmen die Signale $a_{yW}$ und $a_{yW}$ nicht gut überein, dann ist eine ausreichende Genauigkeit des Ausgangssignals des Gierratensensors nicht gesichert. In diesem Fall wird die ROP-Logik ausgeschaltet.

Auch die Situationserkennung lässt sich erweitern und verbessern, indem bei der Berechnung von $a_{yeff}$ zusätzlich zu $a_y$ und $Da_y$ ein vom Lenkwinkel und Lenkwinkelgradienten abhängiger Anteil mit dazu addiert wird, der sowohl bei grossem Lenkwinkelgradienten als auch bei großem Lenkwinkel ein frühzeitiges Erreichen der Schwelle $a_{ymax}$ ermöglicht. Dieser vom Lenkwinkel abhängige Anteil wird in seiner Wirkung zeitlich begrenzt.

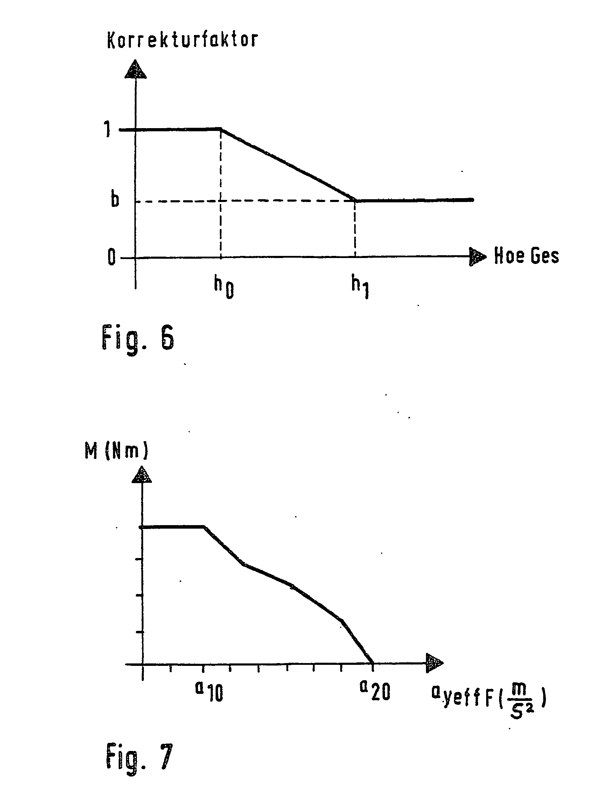

Es soll betont werden, dass abhängig von der Querbeschleunigung das Antriebsmoment auch außerhalb einer ASR-Regelung reduziert werden kann. Somit kann eine Geschwindigkeitszunahme und damit eine steigende Querbeschleunigung verhindert werden. In Fig. 7 ist entlang der Ordinate das maximale mögliche Motormoment M aufgetragen. Entlang der Abszisse ist die gefilterte effektive Querbeschleunigung $a_{yeffF}$ aufgetragen. Bei der Filterung kann es sich beispielsweise um eine PT1-Filterung mit einem Tiefpass 1. Ordnung handeln. Von $a_{yeffF} = 0$ bis zu einer Einschaltschwelle $a_{yeffF} = a_{10}$ findet keine Reduktion des maximal möglichen Motormoments statt. Der Wert von $a_{10}$ kann beispielsweise 5 m/s$^2$ betragen.

Zwischen $a_{yeffF} = a_{10}$ und $a_{yeffF} = a_{20}$ wird das maximal mögliche Motormoment kontinuierlich zurückgenommen. Für $a_{yeffF} = a_{20}$ liegt die volle Reduktion vor, d.h. das Motormoment verschwindet ganz und der Fahrer kann nicht mehr Gas geben. Ein sinnvoller Wert von $a_{20}$ kann in der Größenordnung 10 m/s$^2$ liegen. Es ist denkbar, die Werte $a_{10}$ und $a_{20}$ beispielsweise mit den Werten $a_0$ und $a_1$ (siehe Fig. 4) zu korrelieren. Beispielsweise ist die Wahl $a_{10} = a_0$ und $a_{20} = a_1$ denkbar. Wird in einem Diagramm entlang der Abszisse die Größe KoKipp und entlang der Ordinate wieder das maximal mögliche Motormoment aufgetragen, so ergibt sich eine qualitativ gleiche Kurve wie in Fig. 7. Dies hängt mit der engen Verzahnung von KoKipp und $a_{yeffF}$ zusammen. Deshalb kann das maximal mögliche Motormoment auch mit wachsendem Wert von KoKipp reduziert werden.

## Patentansprüche

1. Vorrichtung zur Erkennung und Behebung einer Umkippgefahr eines mit einem Regelungssystem (11) ausgestatteten Fahrzeuges um eine in Längsrichtung des Fahrzeuges orientierte Fahrzeugachse, wobei mit den Ausgangssignalen des Regelungssystems entsprechend den Ausgangssignalwerten Aktoren (12a,...12n) und/oder Fahrerinformationssysteme angesteuert werden und wobei mit der Vorrichtung eine die Querdynamik des Fahrzeuges beschreibende Größe (KoKipp) ermittelt wird, mit der die die Querdynamik des Fahrzeuges beschreibende Größe mit wenigstens einem charakteristischen Schwellenwert (KoKippGrenz) für die die Querdynamik des Fahrzeuges beschreibende Größe verglichen wird,
mit der für den Fall, bei dem die die Querdynamik des Fahrzeuges beschreibende Größe (KoKipp) größer oder gleich dem charakteristischen Wert (KoKippGrenz) ist, die Menge aller möglichen vom Regelungssystem (11) zur Stabilitätsregelung an die Aktoren (12a,...12n) und/oder Fahrerinformationssysteme abgebbaren Kombinationen von Ausgangssignalwerten eingeschränkt wird,
**dadurch gekennzeichnet,**
**dass** für den Fall, bei dem die die Querdynamik des Fahrzeuges beschreibende Größe (KoKipp) größer oder gleich dem charakteristischen Wert (KoKippGrenz) ist, zugleich vom Regelungssystem (11) zumindest ein Eingriff zur Stabilitätsregelung in das Fahrverhalten des Fahrzeugs vorgenommen wird, dessen Intensität mit wachsendem Wert der die Querdynamik beschreibenden Größe (KoKipp) dergestalt wächst, daß zumindest drei Intensitätsstufen dieses zumindest einen Eingriffs unterschieden werden können und
mit einem Anwachsen der die Querdynamik beschreibenden Größe (KoKipp) eine Reduktion des maximal möglichen Motormoments erfolgt.

2. Vorrichtung nach Anspruch 1, **dadurch gekennzeichnet dass** die Einschränkung der Menge aller möglichen vom Regelungssystem (11) zur Stabilitätsregelung an die Aktoren und/oder Fahrerinformationssysteme abgebbaren Kombinationen von Ausgangssignalwerten zur Untersagung wenigstens eines durch das Regelungssystem (11) prinzipiell möglichen Eingriffs zur Stabilitätsregelung in des Fahrverhalten des Fahrzeuges führt.

3. Vorrichtung nach Anspruch 1, **dadurch gekennzeichnet, dass** es sich bei dem Regelungssystem,(11) um ein Fahrdynamik-Regelungssystem handelt.

4. Vorrichtung nach Anspruch 1, **dadurch gekennzeichnet, dass** für die Ermittlung der die Querdynamik beschreibenden Größe die Querbeschleunigung ($a_y$, $a_{yW}$) sowie die zeitliche Änderung der Querbeschleunigung ($Da_y$, $Da_{yW}$) verwendet werden.

5. Vorrichtung nach Anspruch 1, **dadurch gekennzeichnet, dass** in die Ermittlung der die Querdynamik beschreibenden Größe (KoKipp) eine Tiefpass-Filterung eingeht.

6. Vorrichtung nach Anspruch 1, **dadurch gekennzeichnet, dass** die Ermittlung der die Querdynamik beschreibenden Größe (KoKipp) durch Verwendung von Größen, welche die relativen Abstände zwischen den Radeinheiten und dem Fahrzeugaufbau beschreiben (Hoeij), erfolgt.

7. Vorrichtung nach Anspruch 6, **dadurch gekennzeichnet, dass** aus den Größen, welche die relativen Abstände zwischen den Radeinheiten und dem Fahrzeugaufbau (Hoeij) beschreiben, eine Querbeschleunigung ($a_{yW}$) sowie deren zeitliche Änderung ($Da_{yW}$) berechnet werden.

8. Vorrichtung nach Anspruch 3, **dadurch gekennzeichnet, dass** für den Fall, dass die die Querdynamik beschreibende Groesse groesser oder gleich dem charakteristischen Wert ist, wenigstens einer der folgenden Eingriffe in das Fahrverhalten des Fahrzeuges dem Fahrdynamik-Regelungssystem untersagt werden:

   - alle Eingriffe gegen das Untersteuern werden dem Regler untersagt oder
   - eine Reduzierung der Bremswirkung am kurvenäusseren Vorderrades wird dem Regler untersagt oder
   - Bremseneingriffe zur Reduzierung des Antriebsschlupfes am kurveninneren Vorderrad werden dem Fahrdynamik-Regelungssystem untersagt.

9. Verfahren zur Erkennung und Behebung einer Umkippgefahr eines mit einem Regelungssystem (11) ausgestatteten Fahrzeuges um eine in Längsrichtung des Fahrzeuges orientierte Fahrzeugachse, wobei mit den Ausgangssignalen des Regelungssystems entsprechend den Ausgangssignalwerten Aktoren (12a,...12n) und/oder Fahrerinformationssysteme angesteuert werden und wobei mit dem Verfahren eine die Querdynamik des Fahrzeuges beschreibende Größe (KoKipp) ermittelt wird, mit der die die Querdynamik des Fahrzeuges beschreibende Größe mit wenigstens einem charakteristischen Schwellenwert (KoKippGrenz) für die die Querdynamik des Fahrzeuges beschreibende Größe verglichen wird,
   bei dem für den Fall, bei dem die die Querdynamik des Fahrzeuges beschreibende Größe größer oder gleich dem charakteristischen Wert ist, die Menge aller möglichen vom Regelungssystem zur Stabilitätsregelung an die Aktoren abgebbaren Kombinationen von
   Ausgangssignalwerten eingeschränkt wird,
   **dadurch gekennzeichnet,**
   **dass** für den Fall, bei dem die die Querdynamik des Fahrzeuges beschreibende Größe (KoKipp) größer oder gleich dem charakteristischen Wert (KoKippGrenz) ist, zugleich vom Regelungssystem (11) zumindest ein Eingriff zur Stabilitätsregelung in das Fahrverhalten des Fahrzeugs vorgenommen wird, dessen Intensität mit wachsendem Wert der die Querdynamik beschreibenden Größe (KoKipp) dergestalt wächst, daß zumindest drei Intensitätsstufen dieses zumindest einen Eingriffs unterschieden werden können und
   mit einem Anwachsen der die Querdynamik beschreibenden Größe (KoKipp) eine Reduktion des maximal möglichen Motormoments erfolgt.

**Claims**

1. Device for identifying and eliminating a risk of a vehicle which is equipped with a control system (11) rolling over about a vehicle axis which is oriented in a longitudinal direction of the vehicle, with actuators (12a, ... 12n) and/or driver information systems being actuated with the output signals of the control system in accordance with the output signal values, and a variable (KoKipp) which describes the lateral dynamics of the vehicle being determined with the device, with which the variable which describes the lateral dynamics of the vehicle is compared with at least one characteristic threshold value (KoKippGrenz) for the variable which describes the lateral dynamics of the vehicle, with which in the case in which the variable (KoKipp) which describes the lateral dynamics of the vehicle is greater than or equal to the characteristic value (KoKippGrenz) the quantity of all the possible combinations of output signal values which can be output by the control system (11) to the actuators (12a, ... 12n) and/or driver information systems for the purpose of control stability is limited, **characterized in that** in the case in which the variable (KoKipp) which describes the lateral dynamics of the vehicle is greater than or equal to the characteristic value (KoKippGrenz) at least one intervention for the purpose of controlling stability is simultaneously made in the driving behaviour of the vehicle by the control system (11), the intensity of which intervention increases as the value of the variable (KoKipp) describing the lateral dynamics increases, in such a way that at least three intensity stages of this at least one intervention can be distinguished and maximum possible engine torque is reduced when the variable (KoKipp) which describes the lateral dynamics increases.

2. Device according to Claim 1, **characterized in that** the limitation of the quantity of all the possible combinations of output signal values which can be output by the control system (11) to the actuators and/or driver information systems for the purpose of controlling stability leads to the failure of at least one theoretically possible intervention for the purpose of controlling stability in the driving behaviour of the vehicle by the control system (11).

3. Device according to Claim 1, **characterized in that** the control system (11) is a vehicle movement dynamics control system.

4. Device according to Claim 1, **characterized in that** the lateral acceleration ($a_y$, $a_{yw}$) and the change in the lateral acceleration ($Da_y$, $Da_{yw}$) over time are used to determine the variable which describes the lateral dynamics.

5. Device according to Claim 1, **characterized in that** the determination of the variable (KoKipp) which describes the lateral dynamics includes low-pass filtering.

6. Device according to Claim 1, **characterized in that** the variable (KoKipp) which describes the lateral dynamics is determined by using variables which describe (Hoeij) the relative distances between the wheel units and the vehicle body.

7. Device according to Claim 6, **characterized in that** a lateral acceleration ($a_{yW}$) and its change ($Da_{yW}$) over time are calculated from the variables which describe the relative distances between the wheel units and the vehicle body (Hoeij).

8. Device according to Claim 3, **characterized in that** in the case in which the variable which describes the lateral dynamics is greater than or equal to the characteristic value, the vehicle movement dynamics control system is prohibited from making at least one of the following interventions in the driving behaviour of the vehicle:

   - the controller is prohibited from making all interventions to combat understeer or
   - the controller is prohibited from reducing the braking effect at the front wheel on the outside of a bend or
   - the vehicle movement dynamics control system is prohibited from making braking interventions to reduce the drive slip at the front wheel on the inside of the bend.

9. Method for identifying and eliminating a risk of a vehicle which is equipped with a control system (11) rolling over about a vehicle axis which is oriented in a longitudinal direction of the vehicle, with actuators (12a, ... 12n) and/or driver information systems being actuated with the output signals of the control system in accordance with the output signal values, and a variable (KoKipp) which describes the lateral dynamics of the vehicle being determined with the method, with which the variable which describes the lateral dynamics of the vehicle is compared with at least one characteristic threshold value (KoKippGrenz) for the variable which describes the lateral dynamics of the vehicle, with which in the case in which the variable which describes the lateral dynamics of the vehicle is greater than or equal to the characteristic value the quantity of all the possible combinations of output signal values which can be output by the control system to the actuators for the purpose of control stability is limited, **characterized in that** in the case in which the variable (KoKipp) which describes the lateral dynamics of the vehicle is greater than or equal to the characteristic value (KoKippGrenz) at least one intervention for the purpose of controlling stability is simultaneously made in the driving behaviour of the vehicle by the control system (11), the intensity of which intervention increases as the value of the variable (KoKipp) describing the lateral dynamics increases, in such a way that at least three intensity stages of this at least one intervention can be distinguished and

maximum possible engine torque is reduced when the variable (KoKipp) which describes the lateral dynamics increases.

**Revendications**

1. Dispositif de détection et d'élimination d'un risque de renversement d'un véhicule équipé d'un système de régulation (11), autour d'un axe de véhicule orienté dans le sens longitudinal du véhicule, les signaux de sortie du système de régulation permettant de commander, conformément aux valeurs des signaux de sortie, des actionneurs (12a, ... 12n) et/ou des systèmes d'information du conducteur, le dispositif permettant de déterminer une grandeur (KoKipp) décrivant la dynamique transversale, et de comparer cette grandeur décrivant la dynamique transversale du véhicule à au moins un seuil caractéristique (KoKippGrenz) de la grandeur décrivant la dynamique transversale du véhicule, et dans lequel

   dans le cas où la grandeur (KoKipp) décrivant la dynamique transversale du véhicule est supérieure ou égale à la valeur caractéristique (KoKippGrenz), on limite le nombre de toutes les combinaisons de valeurs des signaux de sortie possibles délivrées par le système de régulation (11) aux actionneurs (12a, ... 12n) et/ou aux systèmes d'information du conducteur pour réguler la stabilité,
   **caractérisé en ce qu'**
   au cas où la grandeur (KoKipp) décrivant la dynamique transversale du véhicule est supérieure ou égale à la valeur caractéristique (KoKippGrenz), le système de réglage (11) intervient en même temps sur le comportement de roulage du véhicule pour régler la stabilité, comportement dont l'intensité augmente au fur et à mesure qu'augmente la valeur de la grandeur (KoKipp) décrivant la dynamique transversale, de manière à pouvoir distinguer au moins trois niveaux d'intensité de cette intervention et à réduire le couple moteur maximal possible lorsque la grandeur (KoKipp) décrivant la dynamique transversale augmente.

2. Dispositif selon la revendication 1,
   **caractérisé en ce que**
   la limitation du nombre de toutes les combinaisons de valeurs des signaux de sortie possibles pouvant être délivrées par le système de régulation de la stabilité (11) aux actionneurs et/ou aux systèmes d'information du conducteur, entraîne l'interdiction d'au moins une intervention en principe possible du système de régulation (11) sur le comportement de roulage du véhicule pour réguler la stabilité.

3. Dispositif selon la revendication 1,
   **caractérisé en ce que**
   le système de régulation (11) est un système de régulation de la dynamique de trajectoire.

4. Dispositif selon la revendication 1,
   **caractérisé en ce qu'**
   on utilise l'accélération transversale ($a_y$, $a_{yw}$) ainsi que la modification dans le temps de l'accélération transversale ($Da_y$, $Da_{yw}$) pour déterminer la grandeur décrivant la dynamique transversale.

5. Dispositif selon la revendication 1,
   **caractérisé en ce qu'**
   un filtrage passe-bas est intégré dans la détermination de la grandeur (KoKipp) décrivant la dynamique transversale.

6. Dispositif selon la revendication 1,
   **caractérisé en ce que**
   la grandeur (KoKipp) décrivant la dynamique transversale est déterminée en utilisant des grandeurs qui décrivent les distances relatives entre les unités de roue et la carrosserie du véhicule (Hoeij).

7. Dispositif selon la revendication 6,
   **caractérisé en ce qu'**
   à partir des grandeurs qui décrivent les distances relatives entre les unités de roue et la carrosserie du véhicule (Hoeij), on calcule une accélération transversale (ayw) ainsi que sa variation dans le temps (Dayw).

8. Dispositif selon la revendication 3,
   **caractérisé en ce que**
   dans le cas où la grandeur décrivant la dynamique transversale est supérieure ou égale à la valeur caractéristique, au moins l'une des interventions suivantes sur le comportement de roulage du véhicule est interdite au système de régulation de la dynamique de trajectoire :

   - toutes les interventions contre le sous-virage sont interdites au régulateur, ou

- une réduction de l'action de freinage sur la roue avant à l'extérieur du virage est interdite au régulateur, ou
- des interventions de freinage pour réduire l'antipatinage à la traction sur la roue avant à l'intérieur du virage sont interdites au système de régulation de la dynamique de trajectoire.

9. Procédé de détection et d'élimination d'un risque de renversement d'un véhicule équipé d'un système de régulation (11) autour d'un axe du véhicule orienté dans le sens longitudinal du véhicule, les signaux de sortie du système de régulation permettant de commander, conformément aux valeurs des signaux de sortie, des actionneurs (12a, ... 12n) et/ou des systèmes d'information du conducteur, le dispositif permettant de déterminer une grandeur (KoKipp) décrivant la dynamique transversale et de comparer cette grandeur décrivant la dynamique transversale du véhicule avec au moins une valeur de seuil caractéristique (KoKippGrenz) de la grandeur décrivant la dynamique transversale du véhicule, et selon lequel

pour le cas où la grandeur décrivant la dynamique transversale du véhicule est supérieure ou égale à la valeur caractéristique, on limite le nombre de toutes les combinaisons de valeurs des signaux de sortie possibles pouvant être délivrées par le système de régulation aux actionneurs pour réguler la stabilité,

**caractérisé en ce que**

pour le cas où la grandeur (KoKipp) décrivant la dynamique transversale du véhicule est supérieure ou égale à la valeur caractéristique (KoKippGrenz), le système de régulation (11) procède en même temps à une intervention sur le comportement de roulage du véhicule pour réguler la stabilité, comportement dont l'intensité augmente au fur et à mesure qu'augmente la valeur de la grandeur (KoKipp) décrivant la dynamique transversale, de manière à pouvoir distinguer au moins trois niveaux d'intensité de cette intervention, et

on réduit le couple moteur maximal possible lorsque la grandeur (KoKipp) décrivant la dynamique transversale augmente.

Fig. 1

EP 1 412 237 B1

Fig. 2

Fig. 3

KoKippRoh

$ay_{eff}/ay_{max}$

$a_0$　　$a_1$

**Fig. 4**

KoKippRoh

51

Tiefpass

KoKippRoh 1

52

max (KoKippRoh, KoKippRoh 1)

KoKipp

**Fig. 5**

Korrekturfaktor

**Fig. 6**

M (Nm)

$a_{yeff}F\left(\dfrac{m}{S^2}\right)$

**Fig. 7**